# EUROPÄISCHE PATENTSCHRIFT

(11) **EP 2 250 039 B1**
(45) Veröffentlichungstag und Bekanntmachung des Hinweises auf die Patenterteilung: **19.09.2012**
(21) Anmeldenummer: 09716048.5
(22) Anmeldetag: 22.01.2009
(51) Int. Cl.: B60J 5/04, E05F 11/48, E05F 15/16

(54) **TÜRMODUL FÜR EINEN SCHIENENLOSEN FENSTERHEBER**
DOOR MODULE FOR A RAILLESS WINDOW LIFTER
MODULE DE PORTE POUR UN LEVE-VITRES SANS RAIL

(30) Priorität: 29.02.2008 DE 102008000477
(43) Veröffentlichungstag der Anmeldung: 17.11.2010
(73) Patentinhaber: Faurecia Innenraum Systeme GmbH, 76767 Hagenbach (DE)
(72) Erfinder: SCHARF, Marian, 57462 Olpe (DE); BÖCKER, Frank, 58089 Hagen (DE); REIG, Carles, 57072 Siegen (DE); ZEMMRICH, René, 57518 Betzdorf (DE)
(74) Vertreter: Richardt Patentanwälte GbR
(86) Internationale Anmeldenummer: PCT/EP2009/050708
(87) Internationale Veröffentlichungsnummer: WO 2009/106388

(56) Entgegenhaltungen:
- EP-A- 0 930 413
- EP-A- 0 955 191
- DE-A1- 19 944 965
- US-A- 5 548 930

## Beschreibung

Die Erfindung betrifft ein Türmodul für eine Kraftfahrzeugtür sowie ein Verfahren zur Herstellung eines Türmoduls für eine Kraftfahrzeugtür.

Aus dem Stand der Technik sind verschiedene Türmodule für Kraftfahrzeugtüren bekannt. Beispielsweise offenbart die DE 199 44 965 A1 ein Türmodul für einen Schienen-Fensterheber. Allerdings haben Fensterheber dieser Art den Nachteil, dass der maximale so genannte Glass-Drop, d.h. der maximale Hub des Fensters zwischen einer Schließ- und einer Öffnungsposition kleiner ist als der Abstand der Umlenkrollen des Fensterhebers. Dieses Problem wurde durch die Einführung des schienenlosen Fensterhebers gelöst. Beispielsweise offenbart die WO 2007/014822 A1 einen solchen schienenlosen Fensterheber.

Der Erfindung liegt demgegenüber die Aufgabe zugrunde, ein verbessertes Türmodul für eine Kraftfahrzeugtür und ein verbessertes Verfahren zur Herstellung eines Türmoduls für eine Kraftfahrzeugtür zu schaffen, wobei das Türmodul einen Kragarm für einen schienenlosen Fensterheber aufweist.

Die der Erfindung zugrundeliegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird ein Türmodul für eine Kraftfahrzeugtür geschaffen, wobei das Türmodul einen Kragarm für einen schienenlosen Fensterheber aufweist, wobei der Kragarm einstückig mit dem Türmodul ausgebildet ist und wobei der Kragarm über einen äußeren Rand des Türmoduls hinausragt. Dabei weist der Kragarm an zumindest dem Ende, welches den Rand des Türmoduls überragt, eine Aufnahme für ein Umlenkmittel eines Fensterheberseils auf.

Das erfindungsgemäße Türmodul hat den Vorteil, dass in einem Arbeitsschritt, beispielsweise in einem Spritzgussverfahren, sowohl Türmodul als auch Kragarm zusammen stoffschlüssig hergestellt werden können. Damit entfallen bei der Montage zusätzliche Montageschritte, wie sie zum Beispiel durch das Aufschrauben eines separat hergestellten Kragarms auf das Türmodul notwendig wären.

Gemäß der vorliegenden Erfindung ist der Kragarm einstückig mit dem Türmodul ausgebildet, das heißt, der Kragarm und das Türmodul bilden eine aus demselben Material bestehende bauliche Einheit, sodass entsprechende Montageschritte zur Fixierung des Kragarms am Türmodul nicht mehr notwendig sind. Vorzugsweise handelt es sich bei dem Material von Kragarm und Türmodul um ein Material, welches geringe Kriecheigenschaften hat, so dass eine ungewollte Verformung aufgrund höherer Temperaturen und der ständigen Belastung durch das Fensterheberseil zuverlässig vermieden werden können. Solch eine Materialwahl mag jedoch unter Umständen nicht ausreichend gute Gleiteigenschaften aufweisen, welche benötigt werden, damit ein Fensterheberseil ohne extreme Reibungskräfte zu verursachen über den Kragarm geführt werden kann. Um also dennoch eine optimale Gleiteigenschaft eines Fensterheberseils über entsprechende am Kragarm angeordnete Umlenkmittel zu ermöglichen, werden diese Umlenkmittel separat in eine entsprechende gegenstückige Aufnahme des Kragarms eingesetzt. Daher liegt die Anforderung für das Umlenkmittel in erster Linie darin, dass hier Materialien verwendet werden, welche bezüglich des Fensterheberseils geringe Reibeigenschaften aufweisen. Damit ist gewährleistet, dass die Kraft des Fensterhebermotors, welche nötig ist, um das Fensterheberseil über die Umlenkmittel zu bewegen, möglichst gering gehalten werden kann.

Nach einer Ausführungsform der Erfindung handelt es sich bei dem Umlenkmittel um ein statisches Umlenkstück oder um eine Umlenkrolle. Statische Umlenkstücke haben dabei den Vorteil einer kostengünstigen Herstellung, wohingegen Umlenkrollen technisch etwas aufwendiger herzustellen sind, was höhere Produktionskosten bedeutet, wobei jedoch bei einer Umlenkrolle der Vorteil eines noch niedrigeren Reibkoeffizienten gegeben ist.

Nach einer weiteren Ausführungsform der Erfindung ist die Aufnahme zur Ausbildung einer formschlüssigen und/oder kraftschlüssigen Verbindung mit dem Umlenkmittel ausgebildet. Damit ist gewährleistet, dass eine optimale Kraftübertragung vom Fensterheberseil auf das Umlenkmittel und vom Umlenkmittel auf die Kragarme gewährleistet ist. Damit werden Kraftspitzen auf bestimmte Kragarmbereiche vermieden, was die Stabilität des Kragarms weiter erhöht.

Nach einer weiteren Ausführungsform der Erfindung weist der Kragarm eine weitere Aufnahme für ein Umlenkmittel des Fensterheberseils auf, wobei sich diese weitere Aufnahme in Erstreckungsrichtung des Kragarms gegenüber dem das Türmodul überragenden Ende des Kragarms befindet. Um einen möglichst großen Glass-Drop zu erzielen, befindet sich die weitere Aufnahme möglichst in der Nähe der Türmodulkante, welche jener Türmodulkante gegenüberliegt, welche durch den Kragarm überdeckt wird.

Nach einer weiteren Ausführungsform der Erfindung umfasst das Türmodul ferner einen weiteren Kragarm mit einem weiteren Umlenkstück, wobei es sich bei zumindest einem der Umlenkstücke der Kragarme um eine Umlenkrolle handelt. Vorzugsweise kommen hierbei insgesamt vier Umlenkmittel zum Einsatz, nämlich drei statische Umlenkstücke und eine Umlenkrolle. Dies ist eine optimale Kombination, da durch die Verwendung von drei statischen Umlenkstücken eine kosteneffiziente Herstellung möglich ist, wohingegen durch den zusätzlichen Einsatz von einer einzelnen Umlenkrolle der Kraftaufwand aufgrund von Reibekräften in Grenzen gehalten wird, welcher durch einen Fensterhebermotor auf die Fensterheberseile zur Bewegung einer Fensterscheibe ausgeübt werden muss. Damit kann auch der Fensterhebermotor so ausgelegt werden, dass er in optimaler Weise die Fensterheberseile unter den gegebenen Bedingungen bewegen kann. Eine kostenintensive Überdimensionierung des Fensterhebermotors entfällt somit.

Nach einer weiteren Ausführungsform der Erfindung weist die Aufnahme ein Rastmittel auf. Damit ist es möglich, in einem einzelnen Arbeitsschritt durch eine einfache Bewegung in Richtung der Erstreckungsrichtung des Kragarms das Umlenkmittel in die Aufnahme einzusetzen. Weitere arbeitsaufwendige Schraub- oder Nietvorgänge entfallen, wodurch weiterhin die Kosteneffizienz zur Herstellung bzw. Montage des erfindungsgemäßen Türmoduls optimiert wird.

Nach einer weiteren Ausführungsform der Erfindung ist die Aufnahme für das statische Umlenkstück bogenförmig ausgebildet, wobei das Rastmittel mittig zur Bogenform angeordnet ist. Vorzugsweise handelt es sich bei dem Rastmittel um eine Aussparung des Kragarms, wobei die Aussparung zur Aufnahme einer am statischen Umlenkstück angeordneten Rastnase ausgebildet ist. Die Verwendung eines bogenförmigen statischen Umlenkstücks hat den Vorteil, dass hier eine optimale Kraftübertragung von Fensterheberseil auf Umlenkstück und von Umlenkstück auf den Kragarm gewährleistet ist. Auch hier werden wiederum Kraftspitzen am Kragarm zuverlässig vermieden, wodurch die Gesamtstabilität des Türmoduls erheblich gesteigert wird. Die mittige Anordnung der Rastmittel relativ zur Bogenform dient auch hier zur optimalen Kraftübertragung.

Nach einer Ausführungsform der Erfindung weist der Kragarm eine wabenförmige Struktur auf. Die Verwendung einer wabenförmigen Struktur hat den Vorteil, dass Material zur Herstellung des Kragarms eingespart werden kann, ohne jedoch auf eine hohe mechanische Stabilität des Kragarms verzichten zu müssen. Die Materialeinsparung bedeutet eine Kostenverringerung bei der Herstellung des Türmoduls und ermöglicht zusätzlich eine Beschleunigung des Herstellungsvorgangs des erfindungsgemäßen Türmoduls zum Beispiel in einem Spritzgussverfahren, da aufgrund der wabenförmigen Struktur und der damit vorhandenen geringeren Kunststoffmasse die Aushärtezeiten des Kunststoffs reduziert werden.

Nach einer weiteren Ausführungsform der Erfindung ist die Aufnahme zentriert bezüglich des Querschnitts des Kragarms angeordnet. Auch dies dient wiederum der optimalen Kraftübertragung der Umlenkmittel auf den Kragarm.

Nach einer weiteren Ausführungsform der Erfindung besteht der Kragarm aus Glasfaser enthaltendes Polypropylen. Dies hat den Vorteil, dass die Kriecheigenschaften des Kragarms auch bei höheren Temperaturen minimiert werden können, ohne jedoch Einbußen bei der mechanischen Elastizität, Bruchfestigkeit sowie der Bearbeitbarkeit hinnehmen zu müssen.

In einem weiteren Aspekt betrifft die Erfindung ein Verfahren zur Herstellung eines Türmoduls für eine Kraftfahrzeugtür, wobei das Herstellungsverfahren den Schritt des Bereitstellens des Türmoduls umfasst, wobei das Türmodul einen Kragarm für einen schienenlosen Fensterheber aufweist, wobei der Kragarm einstückig mit dem Türmodul ausgebildet ist, wobei der Kragarm über einen äußeren Rand des Türmoduls hinausragt und wobei der Kragarm an zumindest dem Ende, welches den Rand des Türmoduls überragt, eine Aufnahme für ein Umlenkmittel eines Fensterheberseils aufweist. In einem weiteren Schritt erfolgt das Einsetzen des Umlenkmittels in die Aufnahme.

Nach einer weiteren Ausführungsform der Erfindung erfolgt das Herstellen des Türmoduls zusammen mit dem Kragarm in einem Spritzgussverfahren.

Nach einer weiteren Ausführungsform der Erfindung umfasst das Verfahren zur Herstellung eines Türmoduls ferner den Schritt des Aufbringens einer Dichtung auf den umlaufenden Rand des Türmoduls, wobei die Dichtung durch schräges Extrudieren auf das Türmodul aufgebracht wird. Die Dichtung ist notwendig, um in einer Kraftfahrzeugtür den Nassraum vom Trockenraum, d.h. die dem Fahrzeuginnenraum zugewandte Seite, wasserdicht abzutrennen. Hierbei ergibt sich jedoch die Schwierigkeit, dass üblicherweise verwendete Extrudierverfahren ein Aufbringen der Dichtung auf den umlaufenden Rand des Türmoduls insofern verhindern, da an verschiedenen Stellen der Kragarm über den Rand des Türmoduls hinausragt. Dieses Problem löst die Anwendung des schrägen Extrudierens, bei welcher der Extrudierkopf so geführt wird, dass er die Dichtungsmasse auf den Rand des Türmoduls auch unterhalb des Kragarms befindlich, welcher den Rand des Türmoduls überragt, auftragen kann.

Im Weiteren werden bevorzugte Ausführungsformen der Erfindung anhand der Zeichnungen näher erläutet. Es zeigen:
- Fig. 1:: eine Ansicht eines erfindungsgemäßen Türmoduls in einer Fahrzeugtür,
- Fig. 2:: eine weitere Ansicht eines erfindungsgemäßen Türmoduls in einer Fahrzeugtür,
- Fig. 3:: eine Ansicht verschiedener Aufnahmen eines Kragarms,
- Fig. 4:: eine weitere Ansicht eines erfindungsgemäßen Kragarms,
- Fig. 5:: eine weitere Ansicht eines erfindungsgemäßen Türmoduls,
- Fig. 6:: ein Flussdiagramm eines Verfahrens zur Herstellung eines Türmoduls.

Im Folgenden sind einander ähnliche Elemente mit gleichen Bezugszeichen gekennzeichnet.

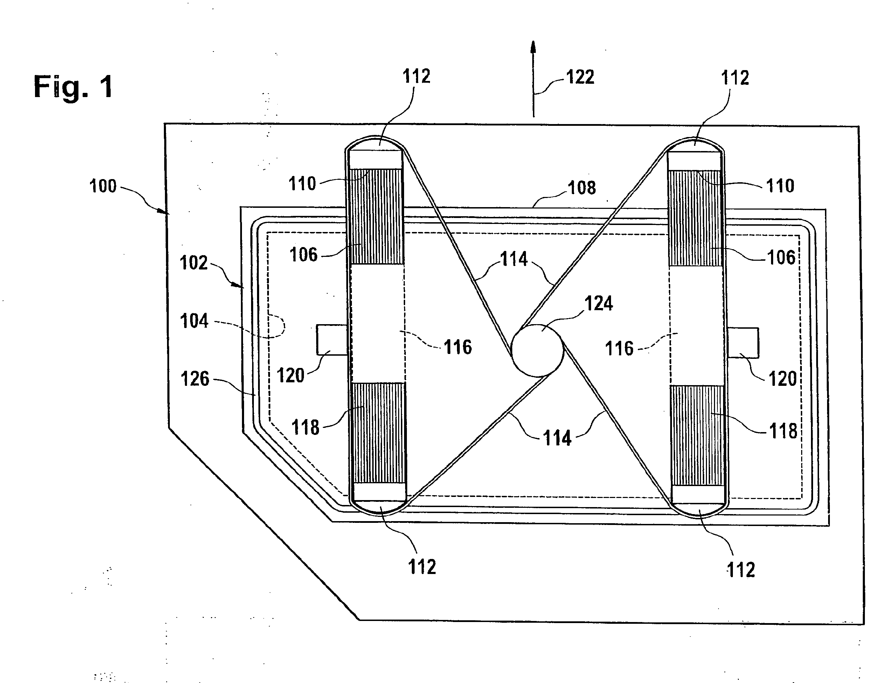

Die Figur 1 zeigt eine Ansicht eines erfindungsgemäßen Türmoduls 102 in einer Fahrzeugtür 100. Die Fahrzeugtür weist eine Aussparung 104 auf, auf welche das Türmodul 102 aufgesetzt wird. Die in der Figur 1 zum Betrachter hin weisende Seite entspricht dabei der Nassseite des Türmoduls, auf welcher auch eine hier nicht gezeigte Fensterscheibe angeordnet ist. Diese Fensterscheibe wird mittels eines schienenlosen Fensterhebers in Richtung oder entgegen der Richtung 122 bewegt.

Der schienenlosen Fensterheber besteht aus Kragarmen 106 und 118. Die Enden dieser Kragarme enthalten jeweils Umlenkmittel 112, welche ein Fensterheberseil zu den einzelnen Umlenkmitteln sowie einem Fensterhebermotor 124 führen. Mitnehmer 120 sind dabei an den Fensterheberseilen 114 befestigt, wobei die Mitnehmer 120 dazu ausgebildet sind, um darin die Fensterscheibe aufzunehmen, um somit durch eine Bewegung der Fensterheberseile 114 und damit einer Bewegung der Mitnehmer 120 die Fensterscheibe in und entgegen der Richtung 122 zu bewegen.

Wichtig in der Figur 1 ist nun, dass die Kragarme 106 zum einen einstückig mit dem Türmodul 102 ausgebildet sind. Ferner ist entscheidend, dass diese Kragarme 106 über einen äußeren Rand 108 des Türmoduls hinausragen. Die Kragarme 106 weisen an deren Enden 110 Aufnahmen auf, in welche Umlenkmittel 112 für das Fensterheberseil 114 eingesetzt werden können.

Ferner weist das Türmodul 102 eine Dichtung 126 auf, welche innerhalb des äußeren Rands 108 des Türmoduls 102 verläuft. Die Dichtung 126 dichtet dabei den Nassraum gegenüber dem Trockenraum der Fahrzeugtüre ab.

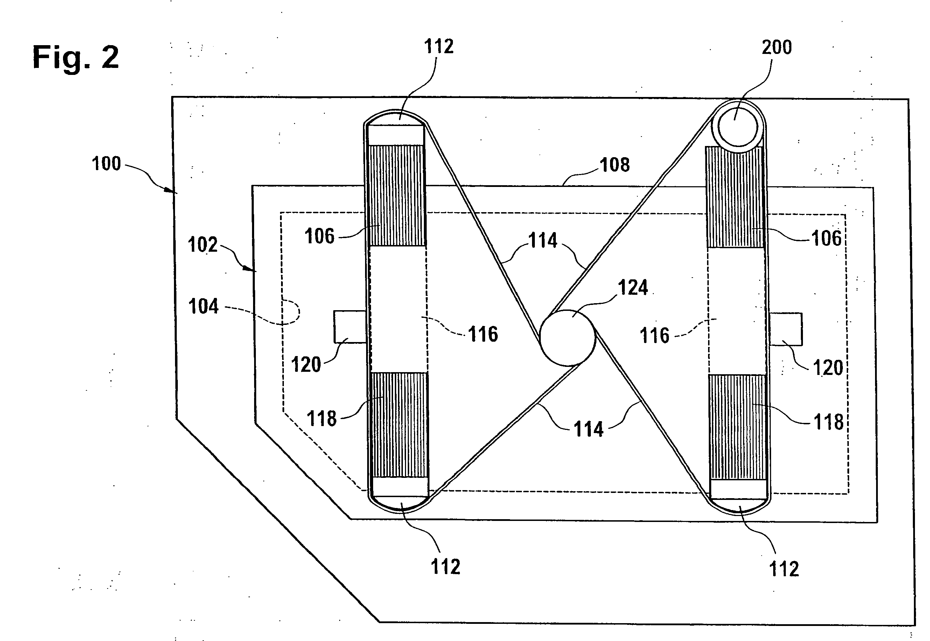

Die Figur 2 zeigt eine weitere schematische Ansicht eines erfindungsgemäßen Türmoduls 102 in einer Fahrzeugtür 100. Der Unterschied zur Figur 1 liegt nun darin, dass am rechts oberen Kragarm ein Umlenkmittel 200 eingesetzt wurde, wobei es sich bei dem Umlenkmittel 200 um eine Umlenkrolle handelt. Damit liegen in der Figur 2 vier Kragarme 106 bzw. 112 vor, wobei drei der Kragarme ein statisches Umlenkstück 112 tragen und ein vierter Kragarm 106 ein Umlenkmittel in Form einer Umlenkrolle 200 aufweist. Diese Kombination dreier Umlenkstücke und einer Umlenkrolle hat den Vorteil, dass kostengünstige Produkte, wie statische Umlenkstücke 112 zum Einsatz kommen können, wobei des Weiteren kostengünstige Fensterhebermotoren 124 verwendet werden können, da aufgrund der Verwendung der Umlenkrolle 200 die durch den Motor aufgewendete Kraft zur Bewegung der Fensterheberseile 114 in Grenzen gehalten werden kann. Die Alternative dazu wäre die ausschließliche Verwendung von Umlenkstücken, was jedoch einen entsprechend stärkeren und leistungsfähigeren Fensterhebermotor 124 erfordern würde, was wiederum höhere Produktionskosten zur Folge hätte.

Bezüglich der einander gegenüberliegenden Kragarme 106 und 118 sei noch angemerkt, dass diese durch einen Steg 116 durchgängig miteinander verbunden sein können. Ein solcher Steg 116 hat den Vorteil, dass die mechanische Belastbarkeit insgesamt erhöht wird, da das Fensterheberseil 114 zum Teil parallel zum Steg vom Umlenkmittel 112 des Kragarms 106 zum Umlenkmittel 112 des Kragarms 118 verläuft.

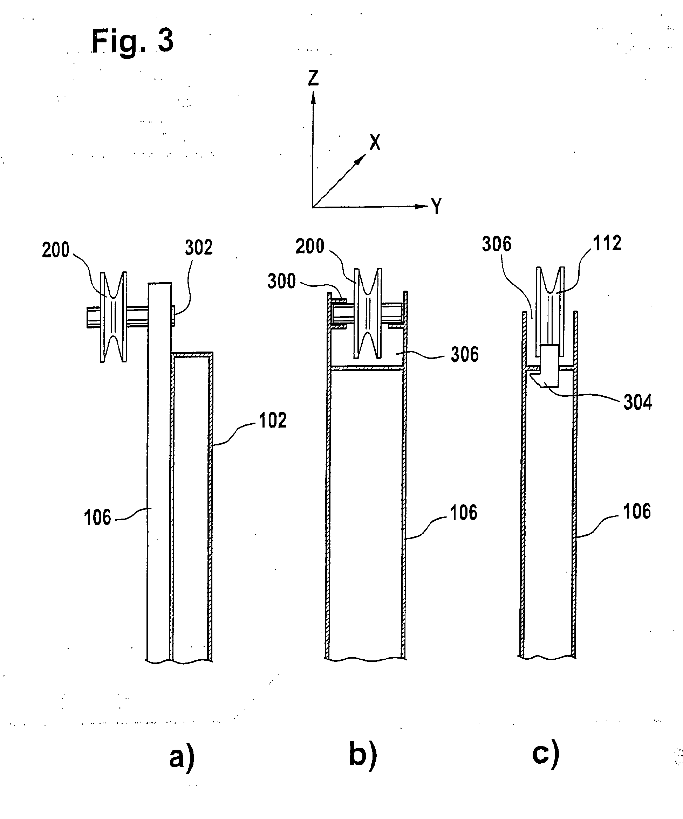

Die Figur 3 zeigt eine Ansicht verschiedener Kragarme. In der Figur 3a ist dabei eine konventionelle Umlenkrolle 200 gezeigt, welche mittels eines Niets 302 am Kragarm des Türmoduls 102 befestigt ist. Dies bedeutet, dass zur Herstellung des in der Figur 3a skizzierten Türmoduls ein Nietvorgang notwendig ist, um damit die Umlenkrolle 200 am entsprechenden Kragarm zu befestigen. Dies hat zwei Nachteile, nämlich zum einen eine komplizierte Handhabbarkeit, welche zeitaufwendig ist und entsprechende Maschinen erfordert. Zum anderen ergibt sich hier der Nachteil, dass die mechanische Belastbarkeit aufgrund der Nietanbindung an den Kragarm stark begrenzt ist.

Abhilfe dazu wird mit dem erfindungsgemäßen Türmodul, wie in den Figuren 3b und 3c skizziert, geschaffen. In der Figur 3b ist die Umlenkrolle 200 gezeigt, deren Achse in eine entsprechende Aufnahme 306 des Kragarms 106 eingesetzt ist. Dabei weist die Aufnahme 306 Rastelemente 300 auf, sodass nach Montage der Umlenkrolle 200 ein Herausfallen der Umlenkrolle aus der Aufnahme 306 verhindert wird. Wichtig ist hier auch noch, dass die Umlenkrolle 200 bezüglich des Querschnitts des Kragarms 106 zentriert ist, vorzugsweise in Y-Richtung des Kraftfahrzeugs als auch in X-Richtung des Kraftfahrzeugs. Damit wird eine optimale Kraftübertragung vom Fensterheberseil auf die Umlenkrolle 200 und damit auf den Kragarm 106 gewährleistet.

In der Figur 3c gezeigt ist anstatt einer Umlenkrolle 200 ein statisches Umlenkstück 112. Das statische Umlenkstück 112 ist wiederum in der Aufnahme 306 des Kragarms 106 aufgenommen. Auf der dem Kragarm zugewandten Seite weist das Umlenkstück 112 eine Rastnase 304 auf, welche in eine entsprechende gegenstückige Aufnahme nach Einsetzen in die Öffnung 306 eingerastet ist. Damit ist eine formschlüssige und/oder kraftschlüssige Verbindung des statischen Umlenkstücks 112 mit dem Kragarm 106 gewährleistet.

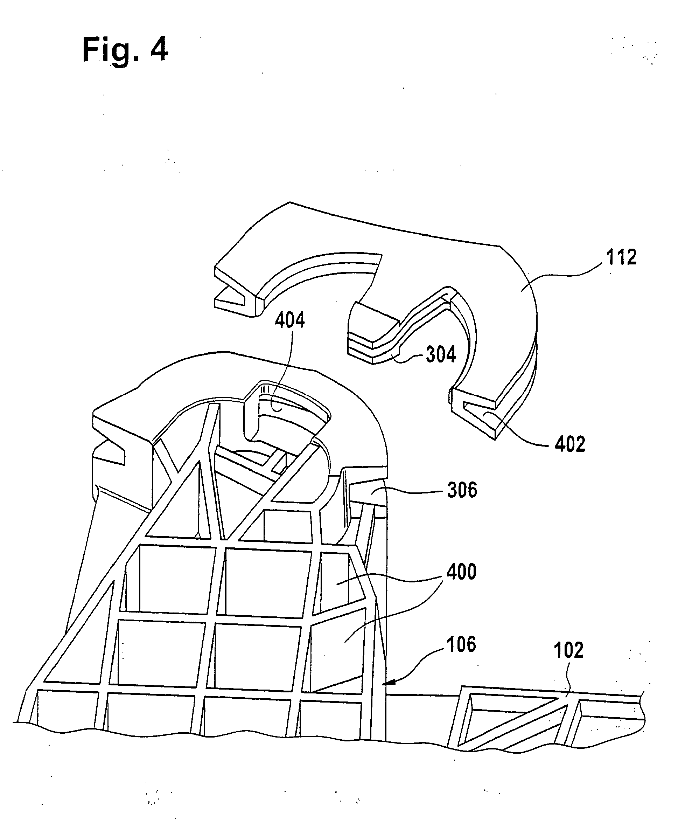

Die Figur 4 zeigt eine weitere schematische Ansicht eines erfindungsgemäßen Kragarmes. Der Kragarm 106 ist einstückig mit dem Türmodul 102 ausgebildet. An dem das Türmodul überragenden Ende des Kragarms 106 weist dieser die Aufnahme 306 auf, in welche das statische Umlenkstück 112 eingesetzt werden kann. Das statische Umlenkstück 112 als auch die gegenstückige Aufnahme 306 sind bogenförmig ausgebildet, sodass eine optimale Kraftübertragung auf den Kragarm 106 stattfinden kann. Des Weiteren weist das bogenförmige statische Umlenkstück eine Rastnase 304 auf, welche in eine entsprechende gegenstückige Aufnahme 404 am Kragarm 106 eingesteckt werden kann. Damit wird das Umlenkstück 112 gegen ein Herausfallen aus der Aufnahme 306 gesichert. Durch einfaches Zusammenquetschen der Rastnasenelemente der Rastnase 304 lässt sich jedoch nachträglich ein Entfernen des Umlenkstücks 112 aus der Aufnahme 306 realisieren, was zum Beispiel zu Reparaturzwecken aufgrund von Abnutzungserscheinungen des Umlenkstücks notwendig sein kann.

Das Umlenkstück weist eine V-förmige Nut 402 auf, in welcher das Fensterheberseil in einem halbkreisförmigen Verlauf der Nut geführt wird.

Des Weiteren in der Figur 4 ersichtlich ist die Wabenstruktur des Kragarms 106. Diese Wabenstruktur 400 sorgt zum einen dafür, dass der Kragarm eine hohe mechanische Stabilität aufweist. Zum anderen sorgt die Wabenstruktur für eine Gewichtsreduktion des Kragarms, da hier kein Vollmaterial mehr benötigt wird.

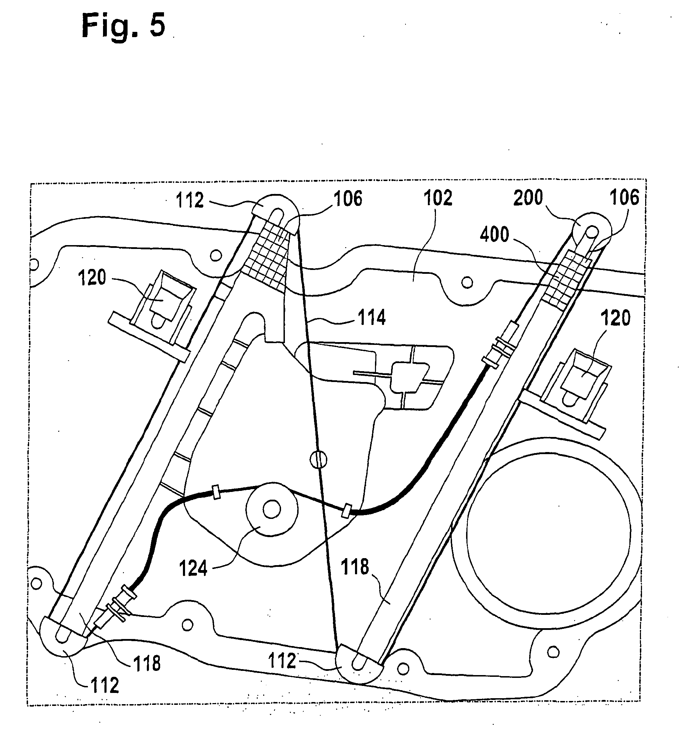

Die Figur 5 zeigt eine weitere Ansicht eines erfindungsgemäßen Türmoduls. Dabei entspricht die Ansicht der Figur 5 im Wesentlichen der stark schematisch vereinfachten Ansicht der Figur 2. Deutlich sichtbar in der Figur 5 ist die durchgängige Ausbildung der Kragarme 106 und 118. Jedoch sind auch hier diese durchgängigen Kragarme einstückig mit dem Türmodul 102 verbunden. Der Kragarm 106 weist dabei die in Figur 4 beschriebene Wabenstruktur auf. Ferner ist in der Figur 5 gezeigt, dass auch hier drei der Umlenkmittel durch statische Umlenkstücke 112 ausgebildet sind, wohingegen das vierte Umlenkmittel eine Umlenkrolle 200 ist.

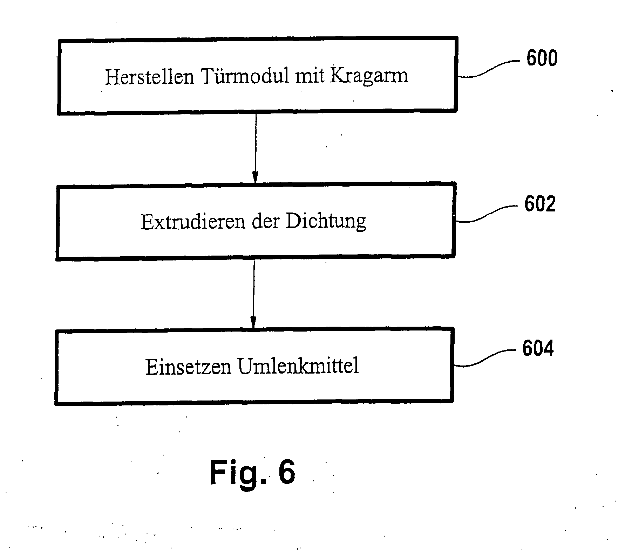

Die Figur 6 zeigt ein Flussdiagramm eines Verfahrens zur Herstellung eines Türmoduls. Das Verfahren beginnt in Schritt 600, dem gemeinsamen Herstellen von Türmodul und Kragarm, wobei das Türmodul zusammen mit dem Kragarm einstückig in einem Spritzgussverfahren hergestellt wird. Auf das hergestellte Türmodul wird daraufhin eine Dichtung in Schritt 602 extrudiert, wobei das Extrudieren schräg, d.h. nicht senkrecht, bezüglich des Türmoduls erfolgt. Damit können auch Stellen des Türmoduls, über welche der Kragarm übersteht, zum Extrudieren zugängig gemacht werden. Schließlich erfolgt in Schritt 604 das Einsetzen der Umlenkmittel in die Kragarme. Die Schritte 604 und 602 sind dabei vertauschbar.

### Bezugszeichenliste

- 100: Kraftfahrzeugtür
- 102: Türmodul
- 104: Öffnung
- 106: Kragarm
- 108: Rand
- 110: Ende des Kragarms
- 112: statisches Umlenkstück
- 114: Fensterheberseil
- 116: Steg
- 118: Kragarm
- 120: Mitnehmer
- 122: Richtung
- 124: Motor
- 126: Dichtung
- 200: Umlenkrolle
- 300: Rastmittel
- 302: Niet
- 304: Rastnase
- 306: Aufnahme
- 400: Nabenstruktur
- 402: V-förmige Nut
- 404: Öffnung

## Patentansprüche

1. Türmodul (102) für eine Kraftfahrzeugtür (100), wobei das Türmodul (102) einen Kragarm (106; 118) mit einem schienenlosen Fensterheber aufweist, wobei der Kragarm (106; 118) einstückig mit dem Türmodul (102) ausgebildet ist, wobei der Kragarm (106; 118) über einen äußeren Rand (108) des Türmoduls (102) hinausragt, wobei der Kragarm (106; 118) an zumindest dem Ende, welches den Rand (108) des Türmoduls (102) überragt, eine Aufnahme mit einem Umlenkmittel (112; 200) eines Fensterheberseils (114) aufweist, **dadurch gekennzeichnet, dass** der Kragarm (106; 118) eine wabenförmige oder eine Rippenstruktur (400) aufweist und dass die Aufnahme und das Umlenkmittel zentriert bezüglich des Querschnitts des Kragarms (106; 118) angeordnet sind.

2. Türmodul (102) nach Anspruch 1, wobei es sich bei dem Umlenkmittel (112; 200) um ein statisches Umlenkstück (112) oder eine Umlenkrolle (200) handelt.

3. Türmodul (102) nach Anspruch 1 oder 2, wobei die Aufnahme zur Ausbildung einer formschlüssigen und/oder kraftschlüssigen Verbindung mit dem Umlenkmittel (112; 200) ausgebildet ist.

4. Türmodul (102) nach einem der vorigen Ansprüche, wobei in Erstreckungsrichtung des Kragarms (106; 118) gegenüber dem das Türmodul (102) überragenden Ende des Kragarms (106; 118) der Kragarm (106; 118) eine weitere Aufnahme für ein Umlenkmittel (112; 200) des Fensterheberseils (114) aufweist.

5. Türmodul (102) nach einem der vorigen Ansprüche, ferner mit einem weiteren Kragarm (106; 118), wobei es sich bei zumindest einem der Umlenkstücke (112) der Kragarme (106; 118) um eine Umlenkrolle (200) handelt.

6. Türmodul (102) nach einem der vorigen Ansprüche, wobei die Aufnahme ein Rastmittel (300;304) aufweist.

7. Türmodul (102) nach einem der vorigen Ansprüche 2 bis 6, wobei die Aufnahme für das statische Umlenkstück (112) bogenförmig ausgebildet ist, wobei das Rastmittel (300; 304) mittig zur Bogenform angeordnet ist.

8. Türmodul (102) nach Anspruch 7, wobei es sich bei dem Rastmittel um eine Aussparung (404) des Kragarms (106; 118) handelt, wobei die Aussparung zur Aufnahme einer am statischen Umlenkstück (112) angeordneten Rastnase ausgebildet ist.

9. Türmodul (102) nach einem der vorigen Ansprüche, wobei der Kragarm (106; 118) aus Glasfaser enthaltendem Polypropylen besteht.

10. Verfahren zur Herstellung eines Türmoduls (102) für eine Kraftfahrzeugtür (100) mit den folgenden Schritten:
- Bereitstellen des Türmoduls, wobei das Türmodul (102) einen Kragarm (106; 118) für einen schienenlosen Fensterheber aufweist, wobei der Kragarm (106; 118) einstückig mit dem Türmodul (102) ausgebildet ist, wobei der Kragarm (106; 118) über einen äußeren Rand (108) des Türmoduls (102) hinausragt, wobei der Kragarm (106; 118) an zumindest dem Ende, welches den Rand (108) des Türmoduls (102) überragt, eine Aufnahme für ein Umlenkmittel (112; 200) eines Fensterheberseils (114) aufweist, wobei der Kragarm (106; 118) eine wabenförmige oder eine Rippenstruktur (400) aufweist und wobei die Aufnahme und das Umlenkmittel zentriert bezüglich des Querschnitts des Kragarms (106; 118) angeordnet sind,
- Einsetzen des Umlenkmittels (112; 200) in die Aufnahme.

11. Verfahren nach Anspruch 12, wobei das Bereitstellen des Türmoduls (102) das Herstellen des Türmoduls (102) zusammen mit dem Kragarm (106; 118) in einem Spritzgussverfahren umfasst.

12. Verfahren nach Anspruch 12 oder 13, ferner mit dem Schritt des Aufbringens einer Dichtung (126) auf den umlaufenden Rand (108) des Türmoduls, wobei die Dichtung (126) durch schräges Extrudieren auf das Türmodul (102) aufgebracht wird.

## Claims

1. A door module (102) for a motor vehicle door (100), wherein the door module (102) has a cantilever arm (106; 118) with a rail-free window lifter, wherein the cantilever arm (106; 118) is formed in one piece with the door module (102), wherein the cantilever arm (106; 118) projects beyond an outer edge (108) of the door module (102), wherein the cantilever arm (106; 118), at least at one end which projects beyond the edge (108) of the door module (102), has an attachment with a deflection means (112; 200) of a window lifter cord (114), **characterised in that** the cantilever arm (106; 118) has a honeycomb or a rib structure (400), and **in that** the attachment and the deflection means are centred with respect to the cross-section of the cantilever arm (106; 118).

2. The door module (102) according to claim 1, wherein the deflection means (112; 200) is a static deflection piece (112) or a deflection roll (200).

3. The door module (102) according to claim 1 or 2, wherein the attachment is designed to form a positive and/or non-positive connection to the deflection means (112; 200).

4. The door module (102) according to one of the preceding claims, wherein, in the direction of extension of the cantilever arm (106; 118) opposite the end of the cantilever arm (106; 118) projecting beyond the door module (102), the cantilever arm (106; 118) has a further attachment for a deflection means (112; 200) of the window lifter cord (114).

5. The door module (102) according to one of the preceding claims, further comprising a further cantilever arm (106; 118), wherein at least one of the deflection pieces (112) of the cantilever arms (106; 118) is a deflection roll (200).

6. The door module (102) according to one of the preceding claims, wherein the attachment has a latching means (300; 304).

7. The door module (102) according to one of the preceding claims 2 to 6, wherein the attachment for the static deflection piece (112) is arched, wherein the latching means (300; 304) is arranged centrally relative to the arch.

8. The door module (102) according to claim 7, wherein the latching means is a recess (404) in the cantilever arm (106; 118), wherein the recess is designed to receive a latching tab arranged on the static deflection piece (112).

9. The door module (102) according to one of the preceding claims, wherein the cantilever arm (106; 118) consists of polypropylene containing glass fibre.

10. A method for producing a door module (102) for a motor vehicle door (100), said method comprising the following steps:
- providing the door module, wherein the door module (102) has a cantilever arm (106; 118) for a rail-free window lifter, wherein the cantilever arm (106; 118) is formed in one piece with the door module (102), wherein the cantilever arm (106; 118) projects beyond an outer edge (108) of the door module (102), wherein the cantilever arm (106; 118), at least at the end which projects beyond the edge (108) of the door module (102), has an attachment for a deflection means (112; 200) of a window lifter cord (114), wherein the cantilever arm (106; 118) has a honeycomb or a rib structure (400), and wherein the attachment and the deflection means are centred with respect to the cross-section of the cantilever arm (106; 118),
- inserting the deflection means (112; 200) into the attachment.

11. The method according to claim 12, wherein the provision of the door module (102) comprises the production of the door module (102) together with the cantilever arm (106; 118) in an injection moulding process.

12. The method according to claim 12 or 13, further comprising the step of applying a seal (126) to the peripheral edge (108) of the door module, wherein the seal (126) is applied to the door module (102) by means of inclined extrusion.

## Revendications

1. Module de porte (102) pour une porte de véhicule automobile (100), le module de porte (102) comportant un bras en porte à faux (106 ; 118) avec un lève-vitre sans rail, le bras en porte à faux (106 ; 118) étant fait d'une seule pièce avec le module de porte (102), le bras en porte à faux (100 ; 118) faisant saillie par rapport à un bord extérieur (108) du module de porte (102), le bras en porte à faux (106 ; 118) comprenant au moins à l'extrémité qui fait saillie par rapport au bord (108) du module de porte (102) un logement avec un moyen de renvoi (112 ; 200) d'un câble de lève-vitre (114), **caractérisé en ce que** le bras en porte à faux (106 ; 118) possède une structure en nid d'abeilles ou rainurée (400) et **en ce que** le logement et le moyen de renvoi sont disposés de manière centrée par rapport à la section transversale du bras en porte à faux (106 ; 118).

2. Module de porte (102) selon la revendication 1, dans lequel le moyen de renvoi (112 ; 200) est une pièce de renvoi statique (112) ou un galet de renvoi (200).

3. Module de porte (102) selon la revendication 1 ou 2, dans lequel le logement est configuré pour réaliser une liaison par complémentarité de forme et/ou par adhérence avec le moyen de renvoi (112 ; 200).

4. Module de porte (102) selon l'une des revendications précédentes, dans lequel, dans l'extrémité du bras en porte à faux (106 ; 118) qui fait saillie par rapport au module de porte (102) dans la direction d'extension du bras en porte à faux (106 ; 118), le bras en porte à faux (106 ; 118) possède un autre logement pour un moyen de renvoi (112 ; 200) du câble de lève-vitre (114).

5. Module de porte (102) selon l'une des revendications précédentes, comprenant en outre un autre bras en porte à faux (106 ; 118), au moins l'une des pièces de renvoi (112) des bras en porte à faux (106 ; 118) étant un galet de renvoi (200).

6. Module de porte (102) selon l'une des revendications précédentes, dans lequel le logement possède un moyen d'encliquetage (300 ; 304).

7. Module de porte (102) selon l'une des revendications précédentes 2 à 6, dans lequel le logement de la pièce statique de renvoi (112) a la forme d'un arc de cercle et le moyen d'encliquetage (300 ; 304) est centré par rapport à l'arc de cercle.

8. Module de porte (102) selon la revendication 7, dans lequel le moyen d'encliquetage est un évidement (404) du bras en porte à faux (106 ; 118), l'évidement étant conçu pour recevoir un mentonnet d'encliquetage disposé sur le moyen statique de renvoi (112).

9. Module de porte (102) selon l'une des revendications précédentes, dans lequel le bras en porte à faux (106; 118) est fabriqué en polypropylène contenant des fibres de verre.

10. Procédé de fabrication d'un module de porte (102) pour une porte de véhicule automobile (100), comprenant les étapes suivantes :
- fournir un module de porte, le module de porte (102) comportant un bras en porte à faux (106 ; 118) pour un lève-vitre sans rail, le bras en porte à faux (106 ; 118) étant fait d'une seule pièce avec le module de porte (102), le bras en porte à faux (106 ; 118) faisant saillie par rapport à un bord extérieur (108) du module de porte (102), le bras en porte à faux (106 ; 118) comprenant au moins à l'extrémité qui fait saillie par rapport au bord (108) du module de porte (102) un logement pour un moyen de renvoi (112 ; 200) d'un câble de lève-vitre (114), le bras en porte à faux (106 ; 118) possédant une structure en nid d'abeilles ou rainurée (400) et le logement et le moyen de renvoi étant implantés de manière centrée par rapport à la section transversale du bras en porte à faux (106 ; 118) ;
- implanter le moyen de renvoi (112 ; 200) dans le logement.

11. Procédé selon la revendication 12, dans lequel l'étape de fourniture du module de porte (102) comprend l'étape consistant à fabriquer le module de porte (102) avec le bras en porte à faux (106 ; 118) à l'aide d'un procédé de moulage par injection.

12. Procédé selon la revendication 12 ou 13, comprenant en outre l'étape consistant à appliquer un joint d'étanchéité (126) sur le bord périphérique (108) du module de porte, le joint d'étanchéité (126) étant appliqué par une extrusion en biais sur le module de porte (102).
